# EUROPÄISCHE PATENTANMELDUNG

(11) **EP 4 722 038 A1**
(43) Veröffentlichungstag der Anmeldung: **08.04.2026**
(21) Anmeldenummer: 24203829.7
(22) Anmeldetag: 01.10.2024
(51) Int. Cl.: B60N 2/68, B60R 22/26

(54) **SITZ, INSBESONDERE FAHRZEUGSITZ**

(71) Anmelder: Adient US LLC, Plymouth, MI 48170 (US); Autoliv Development AB, 447 83 Vårgårda (SE)
(72) Erfinder: MÜHLENBROCK, Ludger, 45665 Recklinghausen (DE); EHLERS, Jens, 25358 Horst (DE)
(74) Vertreter: Liedtke & Partner Patentanwälte

(57) **Zusammenfassung**

Die Erfindung betrifft einen Sitz (200), ausgebildet als ein Fahrzeugsitz (100), wobei der Sitz (200) mindestens:
- ein Sitzteil (102),
- eine mit dem Sitzteil (102) verbundene Rückenlehne (104) und
- einen Sicherheitsgurt (204) aufweist, welcher ein Gurtband (206) zum Rückhalten eines auf dem Sitz (200) sitzenden Insassen oder einer auf dem Sitz (200) angeordneten Attrappe umfasst,

wobei das Gurtband (206) sich zwischen zwei unteren Gurtverankerungspunkten (208) und einem oberen Gurtverankerungspunkt (210) erstreckt,
wobei während einer erhöhten Krafteinwirkung, insbesondere einer prüfbedingten Krafteinwirkung, auf den Sitz (200) die beiden unteren Gurtverankerungspunkte (208) vorverlagerbar ausgebildet sind.

## Beschreibung

Die Erfindung betrifft einen Sitz, insbesondere einen Fahrzeugsitz.

### Stand der Technik

Aus dem Stand der Technik sind Tests von Fahrzeugsitzen allgemein bekannt. Beispielsweise werden Testattrappen (auch Crashtest-Dummys genannt) verwendet, um einen Fahrzeugsitz zu testen. Dabei werden mittels der Testattrappe die Auswirkungen eines Unfalls auf einen menschlichen Körper simuliert. Ferner werden mittels Zugvorrichtungen laut UN-Regelung Nr. 14 (Einheitliche Bedingungen für die Genehmigung von Fahrzeugen hinsichtlich der Sicherheitsgurtverankerungen, Amtsblatt der Europäischen Union vom 13.12.2019, L 324/14- L324/46, [2019/2141]; im Weiteren kurz UN-Regelung Nr. 14 genannt; englische Version: UNECE: UN-R 14/09, Suppl. 3, 07.02.2024) statische Tests durchgeführt, die die Auswirkungen auf die Gurtverankerungspunkte simulieren.

Des Weiteren sind aus dem Stand der Technik Sitze, wie zum Beispiel Fahrzeugsitze oder Bussitze, bekannt, die zwischen verschiedenen Positionen, insbesondere verschiedenen Sitzpositionen, Liegepositionen, Bettpositionen oder dergleichen verstellbar sind.

Dabei muss ein solcher Sitz eine ausreichende Festigkeit aufweisen und auch Gurtkräfte aufnehmen können und sicherstellen, dass es nicht zu einer unfallbedingten übermäßigen Beckenvorverlagerung oder einem Submarining ("Durchtauchen" des Beckens unter dem Gurt) kommt.

### Aufgabe

Der Erfindung liegt die Aufgabe zu Grunde, einen Sitz der eingangs genannten Art bereitzustellen, welcher insbesondere sicherstellt, dass unfallbedingte Beckenvorverlagerungen und Submarining reduziert oder gar vermieden werden können.

### Lösung

Diese Aufgabe wird erfindungsgemäß gelöst durch einen Sitz mit den Merkmalen des Anspruchs 1.

Vorteilhafte Ausgestaltungen, welche einzeln oder in Kombination miteinander eingesetzt werden können, sind Gegenstand der Unteransprüche.

Der erfindungsgemäße Sitz ist ausgebildet als ein Fahrzeugsitz, beispielsweise für eine der Fahrzeugklassen M1/M1G/M2/M3 oder N1/N2/N3, wie diese beispielhaft in der UN-Regelung Nr. 14, Anhang 6 oder Punkt 5.4.2.1 definiert sind, und umfasst zumindest ein Sitzteil, eine mit dem Sitzteil verbundene Rückenlehne und einen Sicherheitsgurt, welcher ein Gurtband zum Rückhalten eines auf dem Sitz sitzenden Insassen oder einer auf dem Sitz angeordneten Attrappe (Dummy) umfasst, wobei das Gurtband sich zwischen zwei unteren Gurtverankerungspunkten und einem oberen Gurtverankerungspunkt erstreckt, und wobei während einer erhöhten Krafteinwirkung auf den Sitz die beiden unteren Gurtverankerungspunkte nach vorne und/oder nach unten vorverlagerbar ausgebildet sind.

Unter der erhöhten Krafteinwirkung wird insbesondere eine prüfbedingte Krafteinwirkung (auch testbedingte Krafteinwirkung genannt) mit einer auf den Sitz, insbesondere auf den Sicherheitsgurt einwirkenden Prüflast, zum Beispiel von Zugkräften, verstanden, wobei der Sitz mit einer gegenüber einer Normalbenutzung des Sitzes höheren Kraft, insbesondere einer Prüflast mittels Zugvorrichtungen, beaufschlagt wird. Die erhöhte Krafteinwirkung wird gemäß der UN-Regelung Nr. 14, Punkt 6. PRÜFUNGEN bis Punkt 7. ÜBERPRÜFUNG WÄHREND UND NACH DEN STATISCHEN PRÜFUNGEN FÜR SICHERHEITSGURTVERANKERUNGEN, Seite L324/23 bis L324/28, Punkt 7.4, ausgeführt, deren Inhalt durch Zitierung hiermit aufgenommen wird.

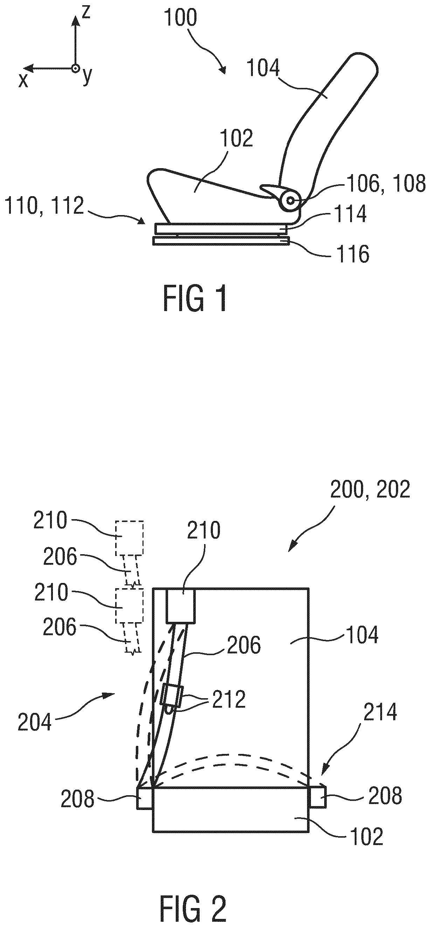

Unter den unteren Gurtverankerungspunkten werden insbesondere die unteren effektiven Gurtverankerungen L1, L2 gemäß UN-Regelung Nr. 14, Nummer 5.4., Lage der Gurtverankerungen, Seiten L324/20 bis L324/21, Punkt 5.4.2.5 und Anhang 3, Abbildungen 1 bis 2, verstanden. Die unteren Gurtverankerungspunkte können beispielsweise an einer Fahrzeugstruktur, einer Sitzstruktur oder an einem anderen Teil des Fahrzeugs angebracht sein oder auf diese verschiedenen Anbringungsstellen verteilt sein.

Dabei kann jeder untere Gurtverankerungspunkt für die Befestigung der Enden von zwei nebeneinander liegenden Sicherheitsgurten von zwei nebeneinander angeordneten Sitzen vorgesehen und ausgebildet sein.

Unter der erhöhten Krafteinwirkung wird insbesondere eine Prüflast, wie zum Beispiel eine Zugkraft verstanden, die auf den Sicherheitsgurt einwirkt.

Unter einer Vorverlagerung der unteren Gurtverankerungspunkte wird insbesondere eine kombinierte Bewegung aus einer Schwenkbewegung nach vorne und einer linearen Bewegung nach vorne und/oder unten oder nur eine Schwenkbewegung oder nur eine lineare Bewegung nach vorne und/oder unten verstanden.

Die Erfindung geht dabei von der Überlegung aus, dass diese unteren effektiven Gurtverankerungen L1, L2 gemäß UN-Regelung 14, Punkt 5.1.3, für die jeweiligen Sitzvarianten in bestimmten Winkelbereichen α1, α2 gemäß UN-Regelung 14, Punkt 5.1.5 liegen, die sie in allen üblichen Benutzungsstellungen nicht verlassen dürfen. Während eines Tests, insbesondere eines Prüftests durch Simulation eines Unfalls (Crash) ist keine Einschränkung der Lage der unteren Gurtverankerungspunkte laut UN-Regelung 14 vorgegeben.

Die mit der Erfindung erzielten Vorteile bestehen darin, dass mittels einer Attrappe (auch Testattrappe oder Prüfattrappe genannt) eine realistische, auf den Sitz und den Sicherheitsgurt wirkende Last einer Person gegeben ist, wobei durch die Vorverlagerung, insbesondere eine Verlagerung nach vorne und/oder nach unten, der unteren Gurtverankerungspunkte sichergestellt werden kann, dass es nicht zu einer prüfbedingten Beckenvorverlagerung und/oder einem Submarining der Attrappe/des Dummys kommt. Somit kann sichergestellt werden, dass der Sicherheitsgurt vollständig auf die einwirkende Prüflast getestet werden kann.

Während einer normalen Krafteinwirkung, zum Beispiel in Benutzungsstellungen des Sitzes, sind die unteren Gurtverankerungspunkte ortsfest angeordnet und gehalten. Eine Vorverlagerung der unteren Gurtverankerungspunkte ist ausschließlich bei einer prüfbedingten erhöhten Krafteinwirkung vorgesehen.

Zusätzlich können die unteren Gurtverankerungspunkte während der erhöhten Krafteinwirkung nach unten verlagerbar sein. Hierdurch wird der Sicherheitsgurt stärker gestrafft. Somit kann sich der Sicherheitsgurt enger an die Attrappe anlegen und diese sichern, so dass diese nicht unter dem Sicherheitsgurt "hindurchrutscht".

Beispielsweise können die unteren Gurtverankerungspunkte während der erhöhten Krafteinwirkung mechanisch vorverlagerbar sein. Insbesondere können die unteren Gurtverankerungspunkte während der erhöhten Krafteinwirkung mittels einer pyrotechnischen Einheit vorverlagerbar sein.

Die pyrotechnische Einheit kann beispielsweise eine Auslöseeinheit und einen Luftsack umfassen, der durch Aktivierung mittels der Auslöseeinheit eine Mechanik aktiviert, die die beiden Gurtverankerungspunkte nach vorne und/oder nach unten verlagert.

Alternativ können die unteren Gurtverankerungspunkte während der erhöhten Krafteinwirkung durch mindestens ein Vorspannelement vorverlagerbar sein. Beispielsweise ist bei erhöhter Krafteinwirkung, insbesondere durch eine Zugkraft, auf das Gurtband das Vorspannelement mittels dieses Gurtbandes aktivierbar, wobei das Vorspannelement dabei in Eingriff mit den Gurtverankerungspunkten zur Vorverlagerung dieser gelangen kann. Alternativ kann das Vorspannelement direkt mit den unteren Gurtverankerungspunkten gekoppelt sein, um diese bei Aktivierung durch das Gurtband direkt vorzuverlagern. Beispielsweise kann je unterem Gurtverankerungspunkt ein separates Vorspannelement vorgesehen sein.

Beispielsweise kann der jeweilige untere Gurtverankerungspunkt während der erhöhten Krafteinwirkung aus einem gesetzlich vorgegebenen Bereich von beispielsweise jeweils um mehr als 0,5° und/oder mehr als 2 mm gegenüber einer vorgegebenen Ausgangslage des Sitzes vor einer Beaufschlagung mit einer Prüflast heraus nach vorne und/oder unten vorverlagerbar, insbesondere schwenkbar, sein. Die Ausgangslage des jeweiligen unteren Gurtverankerungspunkts entspricht dabei der definierten Lage der unteren effektiven Gurtverankerung gemäß UN-Regelung Nr. 14, Punkt 5.4.2 ff., insbesondere der auf Seite L324/43, in der Tabelle der Anlage aufgeführten und zusätzlich unter Punkt 5.1.5. definierten Winkel α1, α2. Der Inhalt der UN-Regelung Nr. 14 gemäß Tabelle auf Seite L324/43, Punkt 5.1.5. und 5.4.2.1. bis 5.4.2.4. wird durch Zitierung hiermit aufgenommen. Dabei unterscheiden sich diese Winkel α1, α2 in Abhängigkeit vom Fahrzeugtyp und/oder Sitztyp und können daher variieren, wie in der UN-Regelung Nr. 14, unter Punkt 5.4.2.1. bis 5.4.2.4. beispielhaft beschrieben.

Insbesondere sind die unteren Gurtverankerungspunkte ausschließlich während der testbedingten oder prüfbedingten Krafteinwirkung, insbesondere unter einer vorgegebenen Prüflast stattfindenden erhöhten Krafteinwirkung, wie diese beispielhaft in der UN-Regelung Nr. 14, Punkt 6.4 "Besondere Prüfvorschriften für Sicherheitsgurtverankerungen", beschrieben ist, vorverlagerbar ausgebildet.

Beispielsweise können die beiden unteren Gurtverankerungspunkte zeitgleich oder synchron vorverlagerbar ausgebildet sein. Alternativ können diese ereignisgesteuert unterschiedlich vorverlagerbar sein.

Zusammenfassend und mit anderen Worten ausgedrückt ist durch die Erfindung ein Sitz bereitgestellt, dessen untere effektive Gurtverankerungen während des Crashs (eines Unfalls) oder einer prüfbedingten erhöhten Krafteinwirkung durch eine Mechanik so verlagert werden, dass sie
1) in Fahrtrichtung nach vorne und/oder unten aus einem vorgegebenen Bereich, insbesondere aus einem vorgegebenen gesetzlichen Bereich, verschoben werden.
2) in Fahrtrichtung nach vorne und/oder unten aus dem vorgegebenen Bereich, insbesondere aus einem vorgegebenen gesetzlichen Bereich, verschoben werden und gleichzeitig nach unten bewegt werden, oder
3) in Fahrtrichtung nach vorne und/oder nach unten aus einem vorgegebenen Bereich, insbesondere aus einem vorgegebenen gesetzlichen Bereich, geschwenkt werden,
um zusätzlich eine Straffung des Gurtes und/oder einen besseren Gurtverlauf zu erzielen.

Die Bewegung kann zum Beispiel mittels verschiedener Mechaniken wie folgt ausgeführt werden:
a) mittels einer pyrotechnischen Einheit, die die Mechanik direkt oder mittels einer Umlenkung bewegt,
b) mittels einer pyrotechnischen Einheit, die zum Beispiel einen Luftsack aufbläst, der dann wiederum die Mechanik bewegt,
c) mittels eines vorgespannten Elements, welches zum Beispiel durch die Gurtkraft im Crash (Unfall) freigegeben wird, und/oder
d) mittels einer direkten Mechanik, wie zum Beispiel einer Spannmechanik, einer Federmechanik oder dergleichen, die zum Beispiel durch die Gurtkraft im Crash (Unfall) freigegeben wird.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Sitz, insbesondere einen Fahrzeugsitz mit einer Längsverstelleinrichtung,
- Fig. 2:: eine schematische Darstellung eines erfindungsgemäßen Sitzes mit zwei unteren vorverlagerbaren Gurtverankerungspunkten und einem oberen Gurtverankerungspunkt, und
- Fig. 3:: eine schematische Darstellung des Sitzes nach Figur 2 mit den zwei unteren vorverlagerbaren Gurtverankerungspunkten.

Einander entsprechende Teile sind in allen Figuren mit den gleichen Bezugszeichen versehen.

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Unter einem Fahrzeugsitz 100 wird insbesondere ein Sitz 200, wie zum Beispiel ein Einzelsitz oder ein Teil einer Sitzbank, verstanden, wie er in der UN-Regelung Nr. 14, Punkt 2.6 definiert ist, deren Definition durch Verweis hiermit aufgenommen wird. Der Fahrzeugsitz 100 kann jedoch auch in abweichender Ausrichtung, beispielsweise als ein nach hinten gerichteter Sitz 200, verbaut oder bewegt werden. Soweit nicht abweichend beschrieben, kann der Fahrzeugsitz 100 beispielsweise spiegelsymmetrisch zu einer senkrecht zur Querrichtung y verlaufenden Ebene aufgebaut sein. Auch kann als Fahrzeugsitz 100 eine Sitzbank oder ein schmaler Fahrzeugsitz 100 oder ein anderer geeigneter Fahrzeugsitz 100 vorgesehen sein.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

Der Fahrzeugsitz 100 kann beispielsweise als ein herkömmlicher Sitz 200 mit einem Sicherheitsgurt 204 (wie in Figur 2 gezeigt) oder als ein Gurtintegralsitz 202 ausgebildet sein.

Figur 2 zeigt einen Sitz 200, insbesondere ausgebildet als Fahrzeugsitz 100. Der Sitz 200 kann ein Gurtintegralsitz 202 für ein Fahrzeug sein. Alternativ kann der Sitz 200 herkömmlich mit einem an einer Fahrzeugstruktur oder an anderen Fahrzeugkomponenten befestigten Sicherheitsgurt 204 ausgestattet sein, wie durch die gestrichelten Optionen aufgezeigt.

Der Sitz 200 kann beispielsweise ein Fahrzeugsitz 100 gemäß einer der Fahrzeugklassen M1/M1G/M2/M3 oder N1/N2/N3 sein, wie diese beispielhaft in der UN-Regelung Nr. 14, Anhang 6 oder Punkt 5.4.2.1 definiert sind. Der Sitz 200 kann insbesondere ein Bussitz, ein VAN-Sitz, ein LKW-Sitz oder dergleichen sein.

Der Sitz 200 umfasst analog zum Fahrzeugsitz 100 zumindest das Sitzteil 102 und die mit dem Sitzteil 102 verbundene Rückenlehne 104.

Der Sitz 200 als Gurtintegralsitz 202 umfasst einen am Sitz 200 integrierten Sicherheitsgurt 204. Der Sicherheitsgurt 204 umfasst zumindest ein Gurtband 206 zum Rückhalten eines auf dem Sitz 200 sitzenden Insassen (nicht näher dargestellt) oder einer auf dem Sitz 200 angeordneten Attrappe (Dummy, nicht näher dargestellt).

Das Gurtband 206 erstreckt sich zwischen zwei unteren Gurtverankerungspunkten 208 und einem oberen Gurtverankerungspunkt 210. Das Gurtband 206 kann sich innerhalb des Sitzes 200 (gestrichelt dargestellt) und teilweise auf dem Sitz 200 (in Volllinie dargestellt) erstrecken und an zwei von den Gurtverankerungspunkten 208, 210 umgelenkt und an dem verbleibenden unteren Gurtverankerungspunkt 208 mittels einer Gurtzunge 212, die in ein Gurtschloss 214 lösbar eingreift, gesichert gehalten sein.

Der obere Gurtverankerungspunkt 210 ist beispielsweise im Sitz 200 integriert. Alternativ kann dieser obere Gurtverankerungspunkt 210 auch an einer Seitenwand, insbesondere einer B-Säule oder C-Säule oder einer anderen geeigneten Stelle, zum Beispiel im Dach oder im hinteren Querblech oder dergleichen, der Fahrzeugstruktur befestigt sein. Die unteren Gurtverankerungspunkte 208 sind seitlich des Sitzes 200 an einer Sitzstruktur des Sitzteils 102 angeordnet. Alternativ können die unteren Gurtverankerungspunkte 208 an einer Fahrzeugstruktur oder an einem anderen Teil des Fahrzeugs angebracht sein.

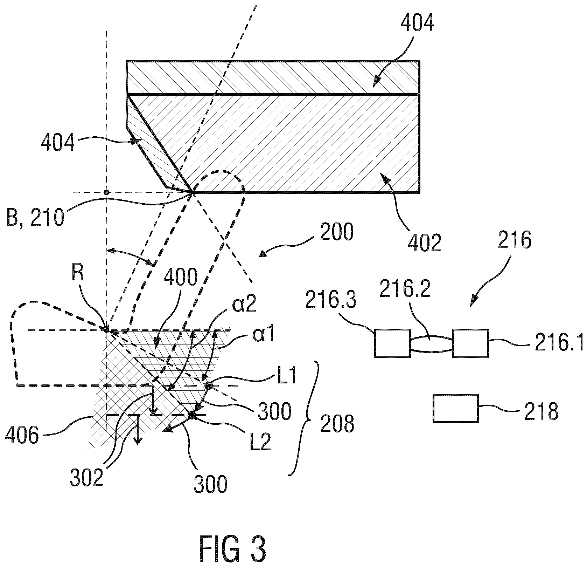

Figur 3 zeigt den Sitz 200 von der Seite und einen gemäß UN-Regelung Nr. 14 ersten zulässigen Anbringungsbereich 400 für die Position von unteren effektiven Verankerungen L1, L2 für den jeweiligen unteren Gurtverankerungspunkt 208 auf der betreffenden Sitzseite und einen zweiten zulässigen Anbringungsbereich 402 für die Position von oberen effektiven Verankerungen B für den oberen Gurtverankerungspunkt 210.

Dabei können für zusätzliche obere Gurtverankerungspunkte 210 weitere zulässige Anbringungsbereiche 404 vorgegeben sein. Die Definition dieser zulässigen Anbringungsbereiche 400, 402, 404 für die Anbringungsbereiche der effektiven Gurtverankerungen L1, L2, B ist in der UN-R 14 im Anhang 3, Seiten L 324/35 bis L324/36, aufgeführt, deren Inhalt durch Zitierung hiermit aufgenommen wird.

Diese unteren effektiven Gurtverankerungen L1, L2 liegen gemäß UN-Regelung Nr. 14, Punkt 5.1.3 und Anhang 3, Abbildung 1, für die jeweiligen Sitzvarianten innerhalb von bestimmten Winkelbereichen α1, α2 in Abhängigkeit vom jeweiligen Fahrzeugtyp und/oder Sitztyp (UN-Regelung Nr. 14, Anhang 3, Abbildung 1 und Tabelle in der Anlage auf Seite L324/43), beispielsweise in einem Bereich von 20° bis 80° des vorgegebenen ersten Anbringungsbereichs 400 für übliche Benutzungsstellungen des Sitzes 200.

Die obere effektive Gurtverankerung B kann in den vorgegebenen zulässigen Anbringungsbereichen 404 und 402 für übliche Benutzungsstellungen des Sitzes 200 liegen, wie in der UN-Regelung Nr. 14, Anhang 3, Abbildung 1 gezeigt.

Zur Bestimmung dieser zulässigen Anbringungsbereiche 400, 402, 404 weist der Sitz 200 einen Bezugspunkt R auf.

Die Erfindung sieht vor, dass der betreffende seitliche untere Gurtverankerungspunkt 208 während der erhöhten Krafteinwirkung auf den Sitz 200 während eines

Prüftests gemäß den Pfeilen 300, 302, insbesondere in einen vorgegebenen Prüfbereich 406 hinein, nach vorne und/oder nach unten vorverlagerbar ist.

Beispielsweise sind die beiden unteren Gurtverankerungspunkte 208 unter der erhöhten Krafteinwirkung, insbesondere einer prüfbedingten Krafteinwirkung (auch testbedingte Krafteinwirkung genannt) mit einer auf den Sitz 200, insbesondere auf den Sicherheitsgurt 204 einwirkenden Prüflast, zum Beispiel von Zugkräften, nach vorne und/oder nach unten vorverlagerbar.

Die erhöhte Krafteinwirkung wird gemäß der UN-Regelung Nr. 14, Punkt 6. PRÜFUNGEN bis Punkt 7. ÜBERPRÜFUNG WÄHREND UND NACH DEN STATISCHEN PRÜFUNGEN FÜR SICHERHEITSGURTVERANKERUNGEN, Seite L324/23 bis L324/28, Punkt 7.4, ausgeführt, deren Inhalt durch Zitierung hiermit aufgenommen wird.

Unter einer Vorverlagerung der unteren Gurtverankerungspunkte 208 (wie in Figur 2 dargestellt) wird insbesondere eine kombinierte Bewegung aus einer Schwenkbewegung gemäß Pfeil 300 nach vorne und einer linearen Bewegung gemäß Pfeil 302 nach unten oder nur eine Schwenkbewegung oder nur eine lineare Bewegung nach vorne und/oder nach unten verstanden.

Die Erfindung geht dabei von der Überlegung aus, dass diese unteren effektiven Gurtverankerungen L1, L2 gemäß UN-Regelung 14, Punkt 5.1.3, für die jeweiligen Sitzvarianten in bestimmten Winkelbereichen α1, α2 gemäß UN-Reglung Nr. 14, Punkt 5.1.5 und Tabelle im Anhang auf Seite L324/43, liegen, die sie in allen üblichen Benutzungsstellungen nicht verlassen dürfen.

Während des Tests, insbesondere des Prüftests durch Simulation eines Unfalls (Crash) ist keine Einschränkung der Lage der unteren effektiven Gurtverankerungen L1, L2 laut UN-Regelung Nr. 14 vorgegeben.

Die mit der Erfindung erzielten Vorteile bestehen darin, dass mittels einer Attrappe (auch Testattrappe oder Prüfattrappe genannt, nicht dargestellt) eine realistische, auf den Sitz 200 und den Sicherheitsgurt 204 wirkende Last einer Person gegeben ist, wobei durch die Vorverlagerung der unteren Gurtverankerungspunkte 208 in den vorgegebenen Prüfbereich 406 sichergestellt werden kann, dass es nicht zu einer prüfbedingten Beckenvorverlagerung und/oder einem sogenannten Submarining der Attrappe kommt. Somit kann sichergestellt werden, dass der Sicherheitsgurt 204 vollständig auf die einwirkende Prüflast getestet werden kann.

Während einer normalen Krafteinwirkung, zum Beispiel in Benutzungsstellungen des Sitzes 200, sind die unteren Gurtverankerungspunkte 208 ortsfest angeordnet und gehalten. Eine Vorverlagerung der unteren Gurtverankerungspunkte 208 ist ausschließlich bei einer prüfbedingten erhöhten Krafteinwirkung oder einer Freischaltung durch eine der zuvor beschriebenen Mechaniken, wie zum Beispiel einer pyrotechnischen Einheit 216, eines vorgespannten Elements, einer Spannmechanik, einer Federmechanik oder dergleichen, vorgesehen.

Zusätzlich können die unteren Gurtverankerungspunkte 208 während der erhöhten Krafteinwirkung gemäß Pfeil 302 nach unten verlagerbar sein. Hierdurch wird der Sicherheitsgurt 204 stärker gestrafft. Somit kann sich der Sicherheitsgurt 204 enger an die Attrappe anlegen und diese sichern, so dass diese Attrappe nicht unter dem Sicherheitsgurt 204 "hindurchrutschen" kann.

Beispielsweise können die unteren Gurtverankerungspunkte 208 während der erhöhten Krafteinwirkung mechanisch nach unten und/oder nach vorne vorverlagerbar sein. Insbesondere können die unteren Gurtverankerungspunkte 208 während der erhöhten Krafteinwirkung mittels einer pyrotechnischen Einheit 216 vorverlagerbar sein.

Die pyrotechnische Einheit 216 kann beispielsweise eine Auslöseeinheit 216.1 und einen Luftsack 216.2 umfassen, der durch Aktivierung mittels der Auslöseeinheit 216.1 eine Mechanik 216.3 aktiviert, die die beiden unteren Gurtverankerungspunkte 208 nach vorne und/oder nach unten gemäß den Pfeilen 300, 302 verlagert.

Alternativ können die unteren Gurtverankerungspunkte 208 während der erhöhten Krafteinwirkung durch mindestens ein Vorspannelement 218 nach vorne und/oder nach unten vorverlagerbar sein. Beispielsweise ist bei erhöhter Krafteinwirkung, insbesondere durch eine Zugkraft, auf das Gurtband 206 das Vorspannelement 218 mittels dieses Gurtbandes 206 aktivierbar.

Das Vorspannelement 218 kann beispielsweise in Eingriff mit den unteren Gurtverankerungspunkten 208 zur Vorverlagerung dieser gelangen. Alternativ kann das Vorspannelement 218 direkt mit den unteren Gurtverankerungspunkten 208 gekoppelt sein, um diese bei Aktivierung durch das Gurtband 206 direkt vorzuverlagern. Beispielsweise kann je unterem Gurtverankerungspunkt 208 ein separates Vorspannelement 218 vorgesehen sein.

Beispielsweise kann der jeweilige untere Gurtverankerungspunkt 208 während der erhöhten Krafteinwirkung aus einem gesetzlich vorgegebenen Bereich, beispielsweise jeweils um mehr als 1°, gegenüber einer vorgegebenen Ausgangslage, insbesondere der Ausgangslage der unteren effektiven Gurtverankerungen L1, L2 ohne Einwirkung einer Prüflast, in den vorgegebenen Prüfbereich 406 nach vorne und/oder nach unten vorverlagerbar, insbesondere schwenkbar, sein.

Mit anderen Worten: Die Ausgangslage des jeweiligen unteren Gurtverankerungspunkts 208 entspricht dabei der definierten Lage der unteren effektiven Gurtverankerungen L1, L2 gemäß UN-Regelung Nr. 14, Punkt 5.4.2 ff.

Zusätzlich oder alternativ können die unteren Gurtverankerungspunkte 208 während der erhöhten Krafteinwirkung aus dem gesetzlich vorgegebenen Bereich, beispielsweise jeweils um mehr als 2 mm, 0,5 cm gegenüber der vorgegebenen Ausgangslage nach vorne und/oder nach unten in den vorgegebenen Prüfbereich 406 bewegbar ausgebildet sein.

Insbesondere sind die unteren Gurtverankerungspunkte 208 ausschließlich während der testbedingten oder prüfbedingten Krafteinwirkung, insbesondere unter einer vorgegebenen Prüflast stattfindenden erhöhten Krafteinwirkung, nach vorne und/oder nach unten vorverlagerbar ausgebildet.

Beispielsweise können die beiden unteren Gurtverankerungspunkte 208 mittels der mindestens einen pyrotechnischen Einheit 216 und/oder mittels des mindestens einen Vorspannelements 218 zeitgleich oder synchron nach vorne und/oder nach unten vorverlagerbar ausgebildet sein. Alternativ können diese ereignisgesteuert unterschiedlich nach vorne und/oder nach unten vorverlagerbar sein.

Dabei kann jeder untere Gurtverankerungspunkt 208 für die Befestigung der Enden von zwei nebeneinander liegenden Sicherheitsgurten 204 von zwei nebeneinander angeordneten Sitzen 200 vorgesehen und ausgebildet sein.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 114: erstes Schienenelement (Oberschiene)
- 116: zweites Schienenelement (Unterschiene)

- 200: Sitz
- 202: Gurtintegralsitz
- 204: Sicherheitsgurt
- 206: Gurtband
- 208: unterer Gurtverankerungspunkt
- 210: oberer Gurtverankerungspunkt
- 212: Gurtzunge
- 214: Gurtschloss
- 216: pyrotechnische Einheit
- 216.1: Auslöseeinheit
- 216.2: Luftsack
- 216.3: Mechanik
- 218: Vorspannelement

- 300: Pfeil
- 302: Pfeil

- 400: erster zulässiger Anbringungsbereich
- 402: zweiter zulässiger Anbringungsbereich
- 404: weitere zulässige Anbringungsbereiche
- 406: vorgegebener Prüfbereich

- B: obere effektive Gurtverankerung
- L1, L2: untere effektive Gurtverankerungen
- R: Bezugspunkt des Sitzes

- x: Längsrichtung
- y: Querrichtung
- z: Vertikalrichtung

- α1, α2: Winkelbereiche

## Patentansprüche

1. Sitz (200), ausgebildet als ein Fahrzeugsitz (100), wobei der Sitz (200) mindestens:
- ein Sitzteil (102),
- eine mit dem Sitzteil (102) verbundene Rückenlehne (104) und
- einen Sicherheitsgurt (204) aufweist, welcher ein Gurtband (206) zum Rückhalten eines auf dem Sitz (200) sitzenden Insassen oder einer auf dem Sitz (200) angeordneten Attrappe umfasst,
wobei das Gurtband (206) sich zwischen zwei unteren Gurtverankerungspunkten (208) und einem oberen Gurtverankerungspunkt (210) erstreckt,
wobei während einer erhöhten Krafteinwirkung, insbesondere einer prüfbedingten Krafteinwirkung, auf den Sitz (200) die beiden unteren Gurtverankerungspunkte (208) nach vorne und/oder nach unten vorverlagerbar ausgebildet sind.

2. Sitz (200) nach Anspruch 1,
wobei die unteren Gurtverankerungspunkte (208) während einer normalen Krafteinwirkung ortsfest angeordnet und gehalten sind.

3. Sitz (200) nach Anspruch 1 oder 2,
wobei die unteren Gurtverankerungspunkte (208) während der erhöhten Krafteinwirkung mechanisch nach vorne und/oder nach unten vorverlagerbar sind.

4. Sitz (200) nach einem der vorhergehenden Ansprüche,
wobei die unteren Gurtverankerungspunkte (208) während der erhöhten Krafteinwirkung mittels einer pyrotechnischen Einheit (216) vorverlagerbar sind.

5. Sitz (200) nach Anspruch 4,
wobei die pyrotechnische Einheit (216) eine Auslöseeinheit (216.1) und einen Luftsack (216.2) umfasst, der durch Aktivierung mittels der Auslöseeinheit (216.1) eine Mechanik (216.3) aktiviert, die die beiden unteren Gurtverankerungspunkte (208) nach vorne und/oder nach unten verlagert.

6. Sitz (200) nach einem der vorhergehenden Ansprüche,
wobei die unteren Gurtverankerungspunkte (208) während der erhöhten Krafteinwirkung durch mindestens ein Vorspannelement (218) vorverlagerbar sind.

7. Sitz (200) nach Anspruch 6,
wobei das Vorspannelement (218) bei erhöhter Krafteinwirkung auf das Gurtband (206) mittels dieses Gurtbandes (206) aktivierbar ist und in Eingriff mit den unteren Gurtverankerungspunkten (208) zur Vorverlagerung dieser gelangt.

8. Sitz (200) nach Anspruch 6 oder 7,
wobei je unterem Gurtverankerungspunkt (208) ein Vorspannelement (218) vorgesehen ist.

9. Sitz (200) nach einem der vorhergehenden Ansprüche,
wobei der jeweilige untere Gurtverankerungspunkt (208) während der erhöhten Krafteinwirkung jeweils um mehr als 0,5° und/oder um mehr als 2 mm gegenüber einer vorgegebenen Ausgangslage nach vorne und/oder nach unten vorverlagerbar, insbesondere schwenkbar und/oder bewegbar, ist.

10. Sitz (200) nach einem der vorhergehenden Ansprüche,
wobei die unteren Gurtverankerungspunkte (208) ausschließlich während der prüfbedingten erhöhten Krafteinwirkung nach vorne und/oder nach unten vorverlagerbar ausgebildet sind.
